# EUROPÄISCHE PATENTSCHRIFT

(11) **EP 1 136 535 B1**
(45) Veröffentlichungstag und Bekanntmachung des Hinweises auf die Patenterteilung: **12.05.2004**
(21) Anmeldenummer: 01107016.6
(22) Anmeldetag: 21.03.2001
(51) Int. Cl.: C09J 7/04, C09J 7/02

(54) **Klebeband**
Adhesive tape
Ruban adhésif

(30) Priorität: 22.03.2000 DE 10014029; 23.01.2001 DE 10102927
(43) Veröffentlichungstag der Anmeldung: 26.09.2001
(73) Patentinhaber: certoplast Vorwerk & Sohn GmbH, 42285 Wuppertal (DE)
(72) Erfinder: Rambusch, Peter, 42115 Wuppertal (DE); Mundt, Stefan Dr., 40593 Düsseldorf (DE)
(74) Vertreter: Nunnenkamp, Jörg, Dr.

(56) Entgegenhaltungen:
- DE-U- 29 823 462
- DE-U- 29 916 616

## Beschreibung

Die Erfindung betrifft ein Klebeband zum Ummanteln von beispielsweise Kabeln in Automobilen, Rohren oder dergleichen zumeist langgestreckten Objekten, mit einem Trägerband auf Veloursbasis, und mit einer wenigstens bereichsweise auf das Trägerband aufgebrachten Kleberbeschichtung. - Im Rahmen der Erfindung kann das Trägerband im Ganzen oder auch nur teilweise aus einem Velours gefertigt sein. Die Kleberbeschichtung ist in der Regel dem zu ummantelnden bzw. umwickelnden Objekt zugewandt, so dass das Trägerband bzw. das Velours eine äußere Schicht bildet, während die Kleberbeschichtung im Innern angeordnet ist.

Ein Klebeband der eingangs beschriebenen Gestaltung ist durch die DE 298 23 462 U1 bekannt geworden. Hier wird primär das Ziel verfolgt, Klappergeräusche wirkungsvoll dämmen zu können. Zu diesem Zweck kombiniert das bekannte Klebeband ein zweibarriges Wirkwaren-Velours mit einem Synthetikfaservlies. Beide vorgenannten textilen Schichten werden zumindest stellen- bzw. teilbereichsweise miteinander verklebt. Das ist aufwendig.

Tatsächlich ist nämlich nicht nur ein getrennter Herstellungsschritt zur Produktion des Synthetikfaservlieses von Nöten, sondern das bekannte Klebeband erfordert darüber hinaus die Vereinigung der beiden vorgenannten Schichten durch zumindest bereichsweises Zusammenkleben. Mit der Innigkeit der Verbindung zwischen den beiden Schichten steht und fällt die Qualität des beschriebenen Zweischicht-Aufbaus. - Hier will die Erfindung insgesamt Abhilfe schaffen.

Der Erfindung liegt das technische Problem zugrunde, ein Klebeband der eingangs beschriebenen Gestaltung so weiter zu bilden, dass der Herstellungsaufwand auf ein Minimum beschränkt ist, wobei die vom Stand der Technik erreichten Vorteile (insbesondere eine wirkungsvolle Geräuschdämpfung von Klappergeräuschen) bei preisgünstigem Aufbau beibehalten bleiben sollen.

Zur Lösung dieser Aufgabe schlägt die Erfindung bei einem gattungsgemäßen Klebeband vor, dass das Trägerband eine Maschendichte von mehr als 5.000 pro dm² aufweist. Optional kann zwischen der Kleberbeschichtung und dem Trägerband eine das Velours verfestigende, nichttextile Maschengrundschicht angeordnet sein. Folglich wird im Gegensatz zu der gattungsbildenden Lehre nach DE 298 23 462 U1 bewusst auf einen zweischichtigen Aufbau aus zumindest zwei textilen Schichten verzichtet. Denn nach üblichem Verständnis wird unter einer nichttextilen Maschengrundschicht eine solche Schicht verstanden, die sich gerade nicht auf einen textilen Verbund, wie beispielsweise ein Vlies, ein Gewebe oder ein Gewirke, gründet.

Tatsächlich kann die nichttextile Maschengrundschicht beispielsweise als Kunststofffolie, vorzugsweise adhäsiv mit dem Trägerband verbundene Polyesterfolie, ausgeführt sein. In diesem Zusammenhang schlägt die Erfindung weiter vor, dass die Kleberbeschichtung zusammen mit der beschriebenen Kunststofffolie bzw. Polyesterfolie ein doppelseitiges Klebeband bildet, welches adhäsiv mit dem Trägerband auf Veloursbasis verbunden wird.

Nach einem Alternativvorschlag der Erfindung kann die nichttextile Maschengrundschicht auch als Kunststoffbeschichtung, vorzugsweise aufgebrachte Acrylatbeschichtung bzw. Polyurethanbeschichtung, ausgeführt sein. Auch eine Kautschukbeschichtung ist denkbar.

Schließlich fallen unter den Oberbegriff der nichttextilen Maschengrundschicht im Rahmen der Erfindung auch Kunststoffschäumschichten. Diese können vorzugsweise aus Polyurethan hergestellt werden, welcher auf das Trägerband aufgeschäumt und anschließend geglättet und heiß kalandriert wird.

Selbstverständlich liegen auch Kombinationen der zuvor beschriebenen drei grundsätzlichen Ausgestaltungen der Maschengrundschicht im Rahmen der Erfindung. D.h., es ist denkbar, eine Kunststofffolie zusätzlich mit einer Kunststoffbeschichtung auszurüsten. Auch liegen ohne Zweifel Kombinationen einer Kunststofffolie mit einer zusätzlichen Kunststoffschäumschicht im Rahmen der Erfindung.

Dabei erfüllt die nichttextile Maschengrundschicht im wesentlichen zwei Funktionen. Zum Einen sorgt sie für eine Stabilisierung des zumeist vollständig aus Velours bestehenden Trägerbandes. Denn nach dem Aufbringen der Maschengrundschicht führen in Längs- und/oder Querrichtung des Klebebandes aufgebrachte Zugkräfte zu deutlich verringerten Dehnungen und damit verbundenen Verjüngungen des Klebebandes im Ganzen. Zum Anderen dient die Maschengrundschicht als Träger für die hierauf aufgetragene, insbesondere aufgerakelte, Kleberbeschichtung. Sie sorgt hier dafür, dass der eingesetzte Kleber praktisch nicht in das Trägerband bzw. das hier eingesetzte Velours eindringen kann. Ein Verkleben des Velours wird also zuverlässig verhindert. Seine Schmiegsamkeit und das positive Geräuschverhalten bleiben erhalten. Außerdem lässt sich der Bedarf an Adhäsivmitteln auf ein Minimum reduzieren.

Die Dehnbarkeit der Maschengrundschicht kann vorteilhaft über die Auswahl einer geeigneten Kunststoffbeschichtung eingestellt und an gegebenenfalls wechselnde Bedingungen angepasst werden. Außerdem lässt sich eine solche Kunststoffbeschichtung vernetzen. Dabei sorgen die durch die thermische Vernetzung eingebrachten Verknüpfungen im Molekülverbund der Kunststoffbeschichtung dafür, dass das Dehnungsverhalten des Trägerbandes im Ganzen in gewünschter Weise beeinflusst werden kann. Denn typischerweise führen viele Vernetzungspunkte gleichsam zu einer großen Federkonstante, also geringen Auslenkungen bei vorgegebener Kraft, während eine demgegenüber verringerte Anzahl von Vernetzungspunkten eine erhöhte Elastizität nach sich zieht. - Sofern als Kunststoffbeschichtung eine Acrylatbeschichtung zum Einsatz kommt, mag diese vorzugsweise aufgesprüht werden.

Die auf die Maschengrundschicht aufgebrachte Kleberbeschichtung kann ihrerseits als Acrylat- und/oder Kautschukkleberbeschichtung ausgeführt sein. Auch an dieser Stelle ist eine Vernetzung mittels UV-Bestrahlung denkbar. Schließlich lässt sich das gesamte Klebeband flammfest ausrüsten, um dem primären Anwendungsfall der Bündelung von Kabeln besonders im Motorraum eines Kraftfahrzeuges Rechnung zu tragen.

In der Regel ist das Trägerband mit einer Maschendichte ausgerüstet, die im Bereich von etwa 25.000 pro dm² bis 50.000 pro dm² liegt. Vorzugsweise ist die Maschendichte in einem Bereich von ca. 30.000 pro dm² bis ca. 40.000 pro dm² angesiedelt. Eine solche Maschendichte wird in der Regel so erreicht, dass das Trägerband auf Veloursbasis bzw. das dazugehörige Velours mit Maschenreihen ausgerüstet ist, deren Anzahl im Bereich von etwa 160 bis 190 Maschen pro dm beträgt. Mit dm ist dabei nach der üblichen Notation ein Dezimeter, also ein Zehntel Meter, gemeint.

Ferner sieht die Erfindung vor, dass das Trägerband eine Maschenstäbchendichte im Bereich von etwa 180 bis 240 Maschenstäbchen/dm aufweist.

In sämtlichen Fällen kann das Trägerband aus einem Velours mit nach außen weisenden Veloursschlingen ausgerüstet sein. Dabei kann die Schlingenlänge zwischen 0,8 bis 2 mm betragen. Wie allgemein bekannt, lassen sich die Veloursschlingen in einem Rauprozess hochrauen und können gegebenenfalls thermofixiert ausgerüstet sein.

Folglich besteht das Trägerband zumeist aus einem wenigstens zweibarrigen Wirkwaren-Velours, wie dies grundsätzlich in DE 298 23 462 U1 beschrieben ist. Einzelheiten der Herstellung eines solchen Velours lassen sich aus DE 35 38 794 C1 entnehmen.

Die nach außen weisenden Veloursschlingen übernehmen im Rahmen der Erfindung primär die Funktion der Schallisolation, weil sie gleichsam als Mikropuffer wirken. Außerdem gewährleisten die Veloursschlingen einen ausgezeichneten Abriebschutz, weil sich frei beweglichen Schlingen einer von außen einwirkenden Scheuerbewegung stets anpassen und somit kaum in Mitleidenschaft gezogen werden. Dagegen kommt der unterhalb dieser äußeren bzw. zweiten Barre angeordneten ersten Barre größtenteils eine Stütz- und Stabilisierungsfunktion zu.

Grundsätzlich kann die zweite Barre mit den Veloursschlingen in geschlossener Samt- und/oder Supersamtbindung ausgebildet sein. Eine wirkungsvolle Verankerung der Veloursschlingen gelingt dann, wenn diese jeweils in die darunter liegende Barre (die erste Barre) eingewirkt sind.

Sofern ein dreibarriger Aufbau verfolgt wird, sind die Veloursschlingen in beide unterhalb der äußeren Barre angeordneten Schichten eingewirkt. Diese gleichsam mehrfache Verankerung der Veloursschlingen in der oder den darunter befindlichen Schichten führt zu einer zuverlässigen und funktionssicheren Festlegung derselben. Außerdem lassen sich die Veloursschlingen im Zuge des an sich bekannten Rauprozesses besonders weit aus dem Veloursgrundmaterial bzw. Trägerband herausziehen, so dass sich zwangsläufig die beschriebenen Schlingenlängen einstellen. Dabei hat sich herausgestellt, dass die Schallisolationsfähigkeit um so wirkungsvoller ausgeprägt ist, je länger die Veloursschlingen aus der äußeren bzw. zweiten Barre herausragen.

Das Trägerband auf Veloursbasis ist in der Regel aus Polyamid oder einem Polyester bzw. Polyestergemisch hergestellt. Dabei greift die Erfindung - wie bereits ausgeführt - in der äußeren, mit den Veloursschlingen ausgerüsteten Schicht, auf eine Samt- bzw. Supersamtbindung zurück, während die darunter befindliche Schicht bzw. die darunter befindlichen Schichten jeweils in geschlossener Trikotbindung gewirkt ausgeführt ist bzw. sind.

Die Feinheit der als Grundmaterial eingesetzten Filamente an dieser Stelle, d.h. im Bereich der sogenannten Unterkette, kann zwischen 20 dtex und 100 dtex liegen. Im Rahmen der Samtbindung in der oberen Schicht bzw. der Oberkette des zugehörigen Kettstuhlwirkwaren-Velours kommen Synthetikfilamente zum Einsatz. Dabei sorgt die beschriebene Wirkart für Veloursschlingen, welche sich quer bzw. senkrecht zur Ebene der darunter befindlichen Barre bzw. der Barren erstrecken.

Die Gesamtdicke des Trägerbandes bzw. des hier eingesetzten Wirkwaren-Velours ist zwischen 0,8 mm und 2 mm angesiedelt. Hierbei ist zu berücksichtigen, dass das Trägerband bekanntermaßen auf eine zusätzliche Vliesschicht - wie sie DE 298 23 462 U1 fordert - bewusst verzichtet. Das Flächengewicht mag Werte annehmen, die im Bereich zwischen 50 g/m² und 400 g/m² liegen.

Selbstverständlich können die jeweiligen Filamente als Grundmaterial eingefärbt werden, um optischen oder technischen Anforderungen zu entsprechen. Die Schallisolationsfähigkeit der Veloursschlingen kann dadurch noch gesteigert werden, dass die geraute Wirkware im Rahmen einer Thermofixierung Heißluft zwischen 150°C bis 200°C ausgesetzt wird. Nach dieser Behandlung verformen sich die Veloursschlingen unter Druckbelastung, richten sich bei Entlastung jedoch nach einer gewissen Erholzeit wieder auf und nehmen die Ausgangsstellung ein. Man beobachtet also ein einwandfreies Relaxationsverhalten.

Üblicherweise beträgt das Flächengewicht des Klebebandes bzw. Velours-Klebebandes ca. 210 g/m² bis 350 g/m². Als bevorzugtes Polymer zur Herstellung der zugehörigen Filamente des Trägermaterials hat sich Polyamid, vorzugsweise PA6, oder Polyester herausgestellt. Dadurch lässt sich eine Reißdehnung des Trägermaterials und damit des gesamten Klebebandes im Bereich zwischen 30% bis 70% darstellen. Die Reißfestigkeit des Klebebandes bzw. des Trägerbandes auf Veloursbasis in Längsrichtung liegt im Bereich von etwa 100 N/cm bis 200 N/cm, vorzugsweise zwischen 130 N/cm und 170 N/cm.

Bei dem Trägerband kann es sich um einen zweibarrigen Kettvelours handeln, welcher aus einer Unterkette bzw. ersten Legebarre und einer Oberkette bzw. zweiten Legebarre zusammensetzt. Das heißt, es wird beim Aufbau des Trägerbandes auf Veloursbasis vergleichbar vorgegangen, wie dies in DE 298 23 462 U1 beschrieben ist. Im Gegensatz hierzu verzichtet die Erfindung jedoch regelmäßig auf eine Zwischenschicht zwischen Trägerband auf Veloursbasis und der eigentlichen Kleberbeschichtung. Diese kann entfallen, weil das Trägerband auf Veloursbasis mit seiner bedeutend höheren Maschendichte eine quasi-geschlossene Oberfläche für die darauf aufzubringende Kleberbeschichtung darstellt. Jedenfalls wird hierdurch sichergestellt, dass der Kleber beim Auftrag (z.B. durch Aufrakeln) nicht in darunter befindliche Schichten des Velours eindringen kann. Vielmehr sorgen Adhäsionskräfte zwischen Kleber und Trägerband auf Veloursbasis dafür, dass die einzelnen Maschen zwar mit dem Kleber benetzt werden, dieser allerdings nicht durch die Maschen hindurchdringen kann.

Bei dem Trägerband handelt es sich in der Regel um ein zweibarriges Kettvelours, dessen Kettengewirk aus zwei Fadenketten zusammengesetzt ist. Diese Fadenketten sind größtenteils zwei gleichlegige Ketten, vorzugsweise eine Unterkette mit Trikotbindung und eine Oberkette mit Samtbindung oder Supersamtbindung. Dieses Kettengewirk kann auf einer Rechts-Links-Kettenwirkmaschine mit einer bestimmten Feinheit hergestellt werden.

Dabei ist die erste Legebarre bzw. Unterkette des Trägerbandes auf Veloursbasis üblicherweise in geschlossener Trikotbindung gewirkt. Zusätzlich handelt es sich bei dem die erste Legebarre bzw. Unterkette des Trägerbandes ausbildenden Filamentgarn zumeist um ein Multifilamentgarn. Dieses Multifilamentgarn kann aus fünf bis zwanzig Einzelfilamenten, insbesondere acht bis zwölf Einzelfilamenten pro Filament ausgeführt sein. Die Feinheit der Multifilamente für die erste Legebarre bzw. Unterkette des Trägers beträgt im Allgemeinen zwischen 50 dtex bis 90 dtex, insbesondere 67 dtex bis 88 dtex.

Sofern im Rahmen der zweiten Legebarre bzw. Oberkette eine geschlossene Samtbindung bzw. Supersamtbindung verfolgt wird, überbrücken deren Platinenmaschen fünf Maschenstäbchen (Samtbindung) bzw. sechs Maschenstäbchen (Supersamtbindung). Deren Maschenköpfe verbinden sich fußseitig mit den Maschenköpfen der üblicherweise darunter befindlichen ersten Legebarre bzw. Unterkette. Diese bildet im nachfolgenden Rauprozess aufrecht stehende Florschlingen aus.

Die Feinheit der Multifilamentgarne für die zweite Legebarre bzw. Oberkette des Trägerbandes ist zwischen 50 bis 90 dtex, insbesondere zwischen 67 bis 88 dtex, angesiedelt. Die Schlingenhöhe der Schlingen des Trägerbandes bzw. die Florschlingen, welche im Rahmen des Rauprozesses aus der Unterkette ausgebildet werden, beträgt zwischen 0,9 und 1,7 mm. Hierdurch wird die besondere Anschmiegsamkeit des erfindungsgemäßen Klebebandes bei gleichzeitig maximaler Unterdrückung eventueller Klappergeräusche erreicht.

Die Anzahl der Schlingen in der zweiten Legebarre bzw. Oberkette des Trägerbandes beträgt zwischen 3.000 und 4.200 pro cm². Als vorteilhaft hat sich herausgestellt, die Gesamtdicke des Trägermaterials bzw. des Trägerbandes und damit des Klebebandes im Ganzen im Bereich zwischen 1,5 bis 2,4 mm auszubilden. Dieser Umstand führt dazu, dass eben auf eine zusätzliche Zwischenschicht - wie nach dem Stand der Technik obligatorisch - verzichtet werden kann. Es versteht sich, dass sowohl Ober- als auch Unterkettmaterial, d.h. das Trägerband im Ganzen und damit das Klebeband insgesamt, jede gewünschte Färbung aufweisen kann. Außerdem empfiehlt die Erfindung, die Filamente der ersten und zweiten Legebarre von Unter- bzw. Oberkette zu hydrophobieren, d.h., wasserabstoßend auszurüsten. Dadurch lassen sich die beschriebenen Adhäsionseffekte zwischen Kleber und Trägerband auf Veloursbasis positiv beeinflussen. Auch kommt es hierdurch infolge Kohäsion zu einer gleichmäßigen Verteilung der Kleberbeschichtung, ohne dass dieser ins Innere des Trägerbandes aus Velours eindringt. Schließlich lassen sich die jeweils aufrechtstehenden Schlingen bzw. Veloursschlingen nicht nur aufrichten, sondern in dieser Position auch thermofixieren.

Als Kleberbeschichtung bzw. aufgebrachter Haftklebstoff hat sich ein Klebstoff auf Kautschuk-, Synthesekautschuk- oder Acrylatbasis als geeignet herausgestellt. Dieser liegt in der Regel als UV-vernetzbarer Acrylat- oder Kautschukhaftklebstoff vor. Eine solche Vorgehensweise ist mit dem Vorteil einer hohen Temperatur- sowie Alterungsbeständigkeit verbunden. Folglich können selbst im Motorraum auftretende erhöhte Temperaturen einer solchen Kleberbeschichtung nichts anhaben. Zudem weisen UV-vernetzte bzw. -vernetzbare Haftklebstoffe eine hohe Medienbeständigkeit gegenüber z.B. Motoröl, Benzin etc. auf.

Außerdem gestatten derartige UV-vernetzbare Haftklebstoffe eine Variation ihrer physikalischen Eigenschaften. Hierzu gehören im wesentlichen ihre Adhäsionsfähigkeit sowie Scherfestigkeit. Denn diese Parameter lassen sich durch Variation der UV-Dosis bei der Vernetzung flexibel einstellen. - Der Klebstoff wird zumeist in Schichten mit einem Flächengewicht im Bereich zwischen 50 g/m² bis 150 g/m², vorzugsweise 70 g/m² bis 100 g/m², aufgetragen.

In sämtlichen beschriebenen Fällen wird ein Klebe- bzw. Wickelband zur Verfügung gestellt, das in bisher nicht für möglich gehaltener Art und Weise eine hervorragende Schallisolationsfähigkeit mit einfachem, preisgünstigen und funktionssicheren Aufbau kombiniert. Dabei gewährleistet entweder die nichttextile Maschengrundschicht oder die spezielle Dichte und stabile Auslegung des Trägerbandes auf Veloursbasis das problemlose Aufbringen des Haftklebers bzw. der Kleberbeschichtung. Man erreicht zudem ausgezeichnete Werte im Bereich Schalldämmung und Abriebschutz. Das heißt, ein zusätzliches Vlies - wie es die DE 298 23 462 U1 fordert - ist ausdrücklich nicht notwendig.

Das führt zu enormen Kosteneinsparungen bei der Herstellung des erfindungsgemäßen Klebebandes. Dabei werden vergleichbare Flächengewichte zur Verfügung gestellt, wie sie im Stand der Technik gang und gäbe sind. Das spricht für eine besonders gute Handhabbarkeit des beschriebenen Klebebandes. Hinzu kommt, dass das Trägerband und damit das Klebeband im Ganzen sehr weich ausgeführt ist und sich hervorragend an den solchermaßen umwickelten Kabelsatz anschmiegt. Dennoch ist ein hoher Abriebschutz für den Kabelsatz gewährleistet, so dass das betreffende Klebeband für den Einsatz im Automobilsektor prädestiniert ist.

UV-Stabilisatoren mögen schließlich dafür sorgen, dass ein alterungsbedingter Zerfall des Klebebandes verhindert wird. Durch den Zusatz von Ammoniumpolyphosphat oder vergleichbarer Flammschutzmittel gelingt eine insgesamt flammfeste Ausrüstung, die bei dem primären Einsatzzweck von besonderer Bedeutung ist. Schließlich liegt es natürlich im Rahmen der Erfindung, das Trägerband auf Veloursbasis zusätzlich zumindest bereichsweise zu lackieren, um so die Stabilität bzw. Steifigkeit zu erhöhen. Man kann natürlich an dieser Stelle auch von vornherein auf ein entsprechend dickes Trägerband zurückgreifen. Durch den Einsatz eines UV-vernetzbaren Acrylat- oder Kautschuk-Haftklebstoffes lässt sich eine besonders hohe Medienbeständigkeit gegenüber Motoröl, Benzin etc. erreichen. Auch diese Haftklebstoffe bzw. die Kleberbeschichtung im Ganzen können bzw. kann schwer entflammbar ausgestaltet sein.

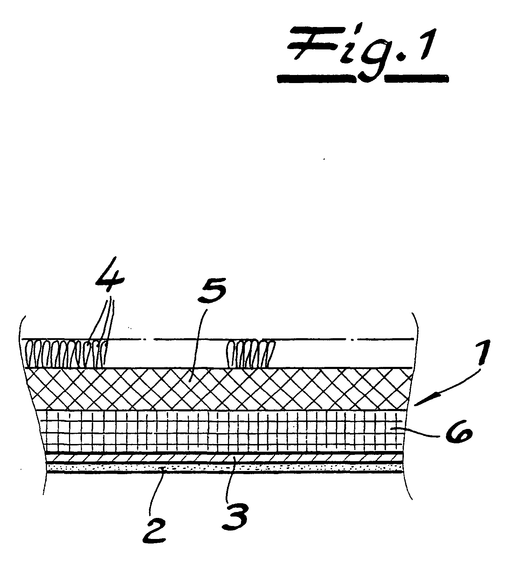

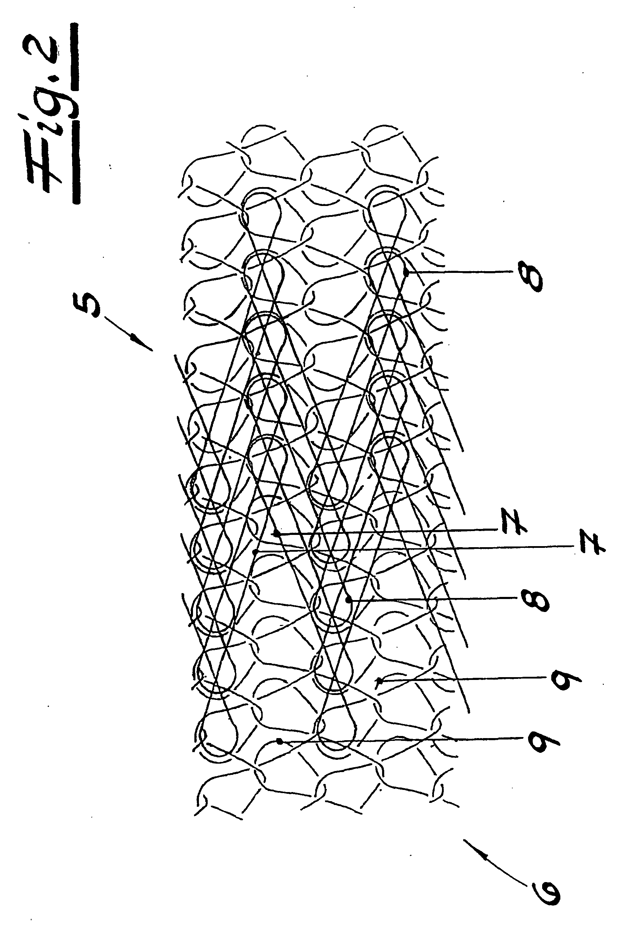

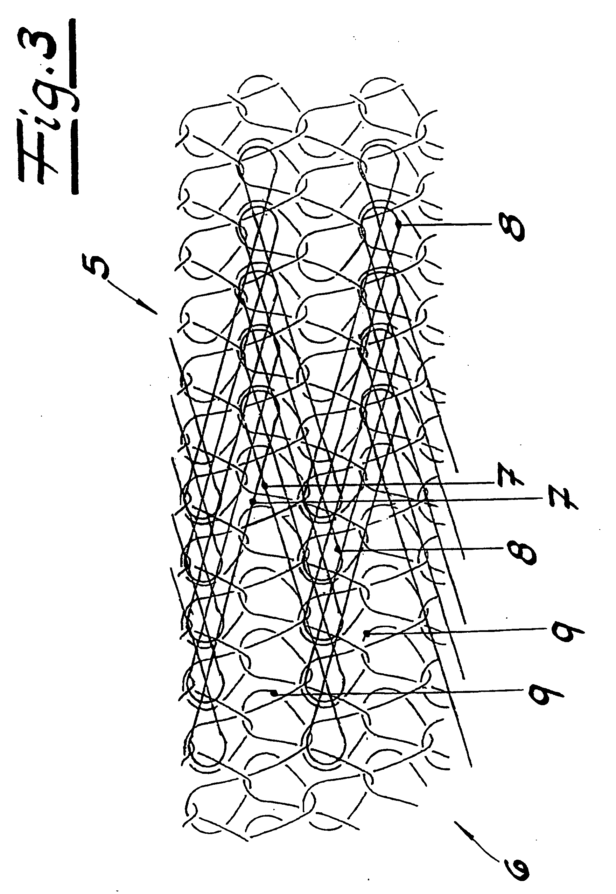

Im Folgenden wird die Erfindung anhand einer lediglich ein Ausführungsbeispiel darstellenden Zeichnung näher erläutert. Die **Figur 1** zeigt ein Klebeband im Längsschnitt, während in der **Figur 2** das Trägerband auf Veloursbasis im Detail dargestellt ist, und zwar in Samtbindung. Die **Figur 3** stellt schließlich den Gegenstand nach Fig. 2 in Supersamtbindung dar.

In der Darstellung gemäß Fig. 1 ist ein Klebeband zu erkennen, welches nach dem Ausführungsbeispiel als Wickelband zur Bündelung oder zum Ummanteln von Kabeln in Automobilen zum Einsatz kommt. Zu seinem grundsätzlichen Aufbau gehört ein Trägerband 1 auf Veloursbasis, welches mit einer Kleberbeschichtung 2 ausgerüstet ist. Diese Kleberbeschichtung 2 bedeckt zumindest bereichsweise das vorgenannte Trägerband 1.

Erfindungsgemäß findet sich zwischen der Kleberbeschichtung 2 und dem Trägerband 1 eine das Velours verfestigende nichttextile Maschengrundschicht 3 oder ist das Trägerband auf Veloursbasis mit einer Maschendichte im Bereich von etwa 25.000 pro dm² bis 50.000 dm² ausgerüstet, so dass auf die vorgenannte Schicht 3 verzichtet werden kann. Dann wird die Kleberbeschichtung 2 direkt auf das Trägerband 1 aufgebracht.

Im Rahmen des dargestellten Ausführungsbeispiels nach Fig. 1 handelt es sich bei der nichttextilen Maschengrundschicht 3 um eine Kunststofffolie bzw. Polyesterfolie 3. Die Polyesterfolie 3 und die Kleberbeschichtung 2 bilden eine Einheit in Form eines doppelseitigen Klebebandes, welches im Zuge der Fertigung mit dem Trägerband vereinigt wird.

In sämtlichen Fällen handelt es sich bei dem Trägerband 1 um ein Wirkwaren-Velours 1 mit nach außen weisenden und lediglich angedeuteten Veloursschlingen 4. Diese Veloursschlingen 4 übernehmen primär die Schallisolation und bilden eine äußere Barre 5. Neben dieser äußeren bzw. zweiten Barre 5 mit Samtbindung bzw. Supersamtbindung findet sich darunter eine erste Barre 6 in Trikotbindung. Die Veloursschlingen 4 sind nicht nur in die zweite Barre 5, sondern auch in die darunter liegende erste Barre 6 eingewirkt. Das Trägerband 1 setzt sich aus Filamenten auf Polyamid- oder Polyesterbasis mit den zuvor beschriebenen Eigenschaften zusammen.

In der Fig. 2 ist das Trägerband 1 im Detail dargestellt, und zwar in Samtbindung. Wie bereits beschrieben, eignet sich dieses Trägerband 1 auf Veloursbasis grundsätzlich dazu, entweder in Kombination mit einer das Velours verfestigenden nichttextilen Maschengrundschicht 3 die Kleberbeschichtung 2 aufzunehmen oder bei entsprechender Maschendichte des Trägerbandes 1 die Kleberbeschichtung 2 direkt aufbringen zu können. Genauer ausgedrückt, wird in der Fig. 2 die äußere bzw. zweite Barre 5 mit Samtbindung dargestellt, während die Fig. 3 an dieser Stelle eine Supersamtbindung zeigt.

Man erkennt in der Fig. 2, dass Platinenmaschen 7 in der zweiten Oberkette bzw. zweiten Barre 5 fünf Maschenstäbchen überbrücken, während die Platinenmaschen 7 bei der Supersamtbindung nach Fig. 3 sechs Maschenstäbchen überbrücken. Die Maschenstäbchen verfügen über Maschenköpfe 8 in der zweiten Barre 5 bzw. Oberkette, die sich im Warengrund mit Maschenköpfen 9 der ersten Barre 6 bzw. Unterkette fest verbinden. Die erste Barre 6 bzw. Unterkette wird in einem nachfolgenden Rauprozess zu aufrecht stehenden Florschlingen bzw. den Veloursschlingen 4 ausgebildet, die gegebenenfalls thermofixiert werden können.

## Patentansprüche

1. Klebeband zum Ummanteln von beispielsweise Kabeln in Automobilen, Rohren oder dergleichen zumeist langgestreckten Objekten, mit einem Trägerband (1) auf Veloursbasis, und mit einer wenigstens bereichsweise auf' das Trägerband (1) aufgebrachten Kleberbeschichtung (2), **dadurch gekennzeichnet, dass** das Trägerband (1) eine Maschendichte von mehr als 5.000 pro dm² aufweist.

2. Klebeband nach Anspruch 1, **dadurch gekennzeichnet, dass** die Maschendichte des Trägerbandes (1) im Bereich von etwa 25.000 pro dm² bis 50.000 pro dm² liegt.

3. Klebeband nach Anspruch 1 oder 2, **dadurch gekennzeichnet, dass** die Gesamtdicke des Trägerbandes (1) zwischen 0,8 mm und 2 mm beträgt.

4. Klebeband nach einem der Ansprüche 1 bis 3, **dadurch gekennzeichnet, dass** das Trägerband (1) Maschenreihen in einer Anzahl von etwa 160 bis 190 Maschen pro dm² aufweist.

5. Klebeband nach Anspruch 3 oder 4, **dadurch gekennzeichnet, dass** das Trägerband (1) eine Maschenstäbchendichte im Bereich von etwa 180 bis 240 Maschenstäbchen/dm besitzt.

6. Klebeband nach einem der Ansprüche 1 bis 5, **dadurch gekennzeichnet, dass** das Trägerband (1) nach außen weisende Veloursschlingen (4) mit einer Schlingenlänge im Bereich von 0,8 bis 2 mm aufweist.

7. Klebeband nach einem der Ansprüche 1 bis 6, **dadurch gekennzeichnet, dass** dessen Flächengewicht im Bereich zwischen 50 bis 400 g/m² angesiedelt ist.

8. Klebeband nach einem der Ansprüche 1 bis 7, **dadurch gekennzeichnet, dass** dieses eine Reißdehnung im Bereich von 30 bis 70% in Längsrichtung aufweist.

9. Klebeband nach einem der Ansprüche 1 bis 8, **dadurch gekennzeichnet, dass** das Trägerband (1) als Kettengewirk aus zwei Fadenketten zusammengesetzt ist, wobei vorzugsweise eine Unterkette mit Trikotbindung und eine Oberkette mit Samtbindung oder Supersamtbindung vorliegen.

10. Klebeband nach einem der Ansprüche 1 bis 9, **dadurch gekennzeichnet, dass** das Trägerband (1) aus einem zumindest zweibarrigen Wirkwaren-Velours (5, 6) aufgebaut ist.

## Claims

1. An adhesive tape for wrapping for example cables in motor vehicles, tubes or like, mainly elongated objects, said tape having a velvet-based carrier (1) and an adhesive coating (2) that is applied onto said carrier (1), at least onto some parts thereof,
**characterized in that** the carrier (1) has a mesh density in excess of 5,000 per dm².

2. The adhesive tape in accordance with claim 1, **characterized in that** the mesh density of the carrier (1) ranges from about 25,000 per dm² to 50,000 per dm².

3. The adhesive tape in accordance with claim 1 or 2, **characterized in that** the overall thickness of the carrier (1) is comprised between 0.8 mm and 2 mm.

4. The adhesive tape in accordance with any of the claims 1 through 3, **characterized in that** the carrier (1) is comprised of mesh rows with a number of about 160 to 190 meshes per dm².

5. The adhesive tape in accordance with claim 3 or 4, **characterized in that** the carrier (1) has a stitch density of about 180 to 240 stitches/dm.

6. The adhesive tape in accordance with any of the claims 1 through 5, **characterized in that** the carrier (1) comprises outward pointing velvet pile loops (4) the length of which ranges from 0.8 to 2 mm.

7. The adhesive tape in accordance with any of the claims 1 through 6, **characterized in that** its weight per unit area ranges from 50 to 400 g/m².

8. The adhesive tape in accordance with any of the claims 1 through 7, **characterized in that** it has a lengthwise elongation at break of from 30 to 70 %.

9. The adhesive tape in accordance with any of the claims 1 through 8, **characterized in that** the carrier (1) is a warp knit fabric composed of two yarn chains, one ground warp with a tricot weave and one nap with a pile weave or a super pile weave being preferably provided.

10. The adhesive tape in accordance with any of the claims 1 through 9, **characterized in that** the carrier (1) is made up of a velvet knit (5, 6) made of at least two textures.

## Revendications

1. Ruban adhésif pour envelopper par exemple des câbles dans des véhicules automobiles, des tuyaux ou d'autres objets similaires de forme le plus souvent allongée, avec un support (1) à base de velours et avec un revêtement de colle (2) appliqué, du moins dans certaines zones, sur le support (1),
**caractérisé en ce que** le support (1) comporte une densité de mailles supérieure à 5.000 par dm².

2. Ruban adhésif selon la revendication 1, **caractérisé en ce que** la densité des mailles du support (1) est comprise entre environ 25.000 par dm² et 50.000 par dm².

3. Ruban adhésif selon la revendication 1 ou 2, **caractérisé en ce que** l'épaisseur totale du support (1) est comprise entre 0,8 mm et 2 mm.

4. Ruban adhésif selon l'une quelconque des revendications 1 à 3, **caractérisé en ce que** le support (1) comporte des rangées de mailles se montant à environ 160 à 190 mailles par dm².

5. Ruban adhésif selon la revendication 3 ou 4, **caractérisé en ce que** la densité des colonnes de mailles du support (1) est comprise entre environ 180 et 240 colonnes de mailles/dm.

6. Ruban adhésif selon l'une quelconque des revendications 1 à 5, **caractérisé en ce que** le support (1) comporte des boucles de velours (4) pointant vers l'extérieur, la longueur des boucles étant comprise entre 0,8 et 2 mm.

7. Ruban adhésif selon l'une quelconque des revendications 1 à 6, **caractérisé en ce que** sa masse surfacique se situe entre 50 et 400 g/m².

8. Ruban adhésif selon l'une quelconque des revendications 1 à 7, **caractérisé en ce que**, dans le sens de la longueur, il comporte un allongement à la rupture compris entre 30 et 70 %.

9. Ruban adhésif selon l'une quelconque des revendications 1 à 8, **caractérisé en ce que** le support (1) est un tricot chaîne constitué de deux chaînes de fil, la chaîne inférieure étant de préférence en tricot et la chaîne supérieure en velours ou en velours super.

10. Ruban adhésif selon l'une quelconque des revendications 1 à 9, **caractérisé en ce que** le support (1) est constitué d'un tricot velours (5, 6) à au moins deux armures.
